# FASCICULE DE BREVET EUROPEEN

(11) **EP 3 168 803 B1**
(45) Date de publication et mention de la délivrance du brevet: **13.10.2021**
(21) Numéro de dépôt: 16197843.2
(22) Date de dépôt: 08.11.2016
(51) Int. Cl.: G06Q 20/34, G06Q 20/38, G06Q 20/40

(54) **PROCÉDÉ DE CHIFFREMENT DE DONNÉES DE MOYENS DE PAIEMENT, MOYEN DE PAIEMENT, SERVEUR ET PROGRAMMES CORRESPONDANTS**
CHIFFRIERVERFAHREN DER DATEN VON ZAHLUNGSMITTELN, ENTSPRECHENDE ZAHLUNGSMITTEL, ENTSPRECHENDER SERVER UND ENTSPRECHENDE PROGRAMME
METHOD FOR ENCRYPTING DATA OF PAYMENT MEANS, CORRESPONDING PAYMENT MEANS, SERVER AND PROGRAMS

(30) Priorité: 10.11.2015 FR 1560772
(43) Date de publication de la demande: 17.05.2017
(73) Titulaire: Ingenico Group, 75015 Paris (FR)
(72) Inventeur: NACCACHE, David, 75016 PARIS (FR); GERAUD, Rémi, 92160 ANTONY (FR); KOUDOUSSI, Hiba, 75012 PARIS (FR)
(74) Mandataire: Vidon Brevets & Stratégie

(56) Documents cités:
- EP-A2- 2 787 474
- US-A1- 2007 136 211
- US-A1- 2008 110 983
- US-A1- 2009 150 295
- US-A1- 2010 127 083
- US-A1- 2010 185 545
- US-A1- 2010 258 625
- US-A1- 2011 184 867
- US-A1- 2012 153 028
- US-A1- 2014 344 153
- Wikipedia: "Hash chain", , 20 October 2015 (2015-10-20), XP055768567, Retrieved from the Internet: URL:https://en.wikipedia.org/w/index.php?t itle=Hash_chain&oldid=686647649 [retrieved on 2021-01-25]

## Description

### 1. Domaine

L'invention se rapporte à la sécurisation des moyens de paiement. L'invention se rapporte plus spécifiquement à la sécurisation de moyens de paiement comprenant des données personnelles. L'invention se rapporte plus particulièrement à la sécurisation de cartes bancaires.

Pour effectuer leurs achats sur Internet, les utilisateurs sont habitués à saisir des données de leur carte bancaire au sein d'un formulaire de saisie. Certaines de ces données sont supposées limiter la fraude. Parmi ces données, on peut notamment citer le cryptogramme visuel à trois chiffres se trouvant au dos de la carte. Cependant il s'avère que 80 % des transactions frauduleuses réalisées à distance le sont avec ce code.

### 2. Art antérieur

Pour pallier la fraude importante que connait ce moyen de paiement (particulièrement lorsqu'il s'agit de paiement en ligne), des solutions ont été proposées, telle que la technique dite du "3D Secure".

Cette technique permet d'ajouter une étape de vérification supplémentaire lors du paiement sur Internet. "3D Secure" a été développé par Visa© et Mastercard© pour permettre aux marchands de limiter les risques de fraude sur Internet, liés aux tentatives d'usurpation d'identité. Il consiste à s'assurer, lors de chaque paiement en ligne, que la carte est utilisée par son véritable titulaire. Ainsi, une étape de saisie supplémentaire a lieu au moment du paiement. En plus du numéro de carte bancaire, de la date d'expiration de la carte et des trois chiffres du code de sécurité (imprimés au dos de la carte), l'internaute doit saisir un mot de passe, tel que sa date de naissance (authentification simple) ou un code dynamique à usage unique (authentification forte) reçu par SMS. Cette dernière solution est plus efficace car elle assure que l'utilisateur qui saisit les données relatives à la carte bancaire dispose également d'un terminal de communication permettant de recevoir un code dynamiquement généré. En d'autres termes, "3D Secure" utilise le numéro de téléphone du porteur de la carte afin de pouvoir transmettre à ce dernier un « défi » prouvant l'identité de l'utilisateur qui tente de payer par carte bancaire (le défi étant un code à saisir dans un champ déterminé d'une page web). Ainsi, la technique proposée consiste à transmettre des données représentatives d'informations émanant des commerçants (des messages de sécurité, des messages commerciaux, des messages d'information), de manière indirecte, aux utilisateurs, en utilisant un service de transmission de données propre à un serveur d'un établissement bancaire auprès duquel ledit utilisateur possède un compte bancaire. La technique "3D Secure" présente cependant des limites : la première consiste en la nécessité d'une part que la banque et le commerçant en ligne soit équipés d'une architecture complémentaire, ce qui n'est pas toujours le cas ; la deuxième consiste en ce que cette étape supplémentaire de saisie est un facteur non négligeable d'abandon de commande pour les utilisateurs. En effet, le fait de devoir disposer de son terminal de communication afin de pouvoir y lire ce code dynamique est contraignant.

Afin de pallier cette problématique de perte de clients et de complexité d'architecture, des industriels ont proposé des solutions reposant sur une carte de paiement comprenant un code dynamique, dont la valeur évolue.

Par exemple, le document US 2009/0150295 décrit une carte bancaire apte à afficher un code de vérification particulier dont la valeur change à chaque transaction effectuée avec la carte : une fois qu'un code de vérification a été utilisé pour une transaction, un nouveau code est affiché. La séquence d'affichage des codes de vérification est régie selon une liste ordonnée de codes de vérification, pré-chargée dans la carte bancaire lors de son émission. Les codes de vérification ne sont donc pas générés par la carte bancaire elle-même, et leur nombre est fini, limitant *de facto* le nombre de transactions réalisable avec une telle carte bancaire.

Dans d'autres solutions, la valeur du code dynamique évolue selon une période temporelle déterminée (par exemple toutes les heures ou toutes les demi-heures). Il s'agit d'une carte bancaire, de format classique, respectant les normes en vigueur (notamment au niveau de la taille et de l'épaisseur). Cette carte embarque, au dos, à l'emplacement traditionnel du code de vérification (CVV), un écran de type "E ink" (de l'anglais pour "electrophoretic ink") comprenant trois caractères. Cet écran est relié, par un bus de données, à un processeur, lequel est relié à une batterie suffisamment petite et fine pour s'insérer dans la carte de paiement sans en changer le format. Le processeur est en charge de la modification régulière du code de vérification.

La technique mise en œuvre pour modifier le code de vérification est la suivante : sur la base d'un code d'origine, le processeur calcule, à intervalles réguliers, un nouveau code directement issu de ce code d'origine. Ce calcul est effectué en réalisant une opération cryptographique sur le code d'origine, laquelle opération délivrant le code dynamique qui est par exemple affiché sur l'écran "E ink". De son côté, le serveur reçoit également le code d'origine associé à la carte de l'utilisateur. Lorsque l'utilisateur effectue un paiement, le serveur reçoit le code dynamique qui a été saisi par l'utilisateur. Sur la base de ce code dynamique reçu, le serveur effectue un calcul inverse du calcul effectué par le processeur de la carte pour retrouver le code d'origine (et compare donc le code obtenu au code de référence qu'il possède lui-même) ; alternativement, sur la base de ce code dynamique reçu, le serveur effectue un calcul identique à celui effectué par le processeur de la carte, à partir du code de référence, et vérifie qu'il obtient le même code de vérification que celui reçu. Dans une troisième variante, le processeur de la carte calcule une signature numérique, dont la validité est ensuite vérifiée par le serveur.

On comprend, quelle que soit la méthode employée, que celle-ci met en œuvre d'une part un matériel cryptographique, en possession de la carte et du serveur et d'autre part une composante temporelle : en effet, pour pouvoir générer un code dynamiquement, par exemple toutes les heures ou toutes les demi-heures, le processeur de la carte bancaire dispose d'une horloge, horloge sur la base de laquelle le calcul cryptographique est effectué. Alternativement, un nouveau code peut également être demandé par l'utilisateur lui-même, par pression sur un bouton.

Il résulte de cette mise en œuvre qu'un problème récurrent est celui de la désynchronisation des horloges de la carte et du serveur. Ce problème apparaît par exemple le scénario suivant : la carte de l'utilisateur génère un code dynamique (en se basant sur des compteurs, sur la date et l'heure, etc.) qu'elle transmet à l'utilisateur (par exemple au moyen d'un écran). Ce code est transmis à l'émetteur de la carte qui doit en vérifier la validité. Pour cela, l'émetteur de la carte doit générer lui-même et avec les mêmes algorithmes que la carte un code dans les conditions (heure, etc.) de la transaction. Si le code transmis par l'utilisateur et le code recalculé par l'émetteur coïncident, la transaction est validée. Cette approche nécessite une synchronisation entre la carte et l'émetteur de la carte.

Cette synchronisation est effectuée au moment de la création de la carte par le fabriquant, et peut occasionnellement être effectuée à nouveau (par un guichet automatique de banque par exemple), mais ces mises à jour ne sont qu'épisodiques.

Hormis une désynchronisation de l'horloge de la carte peut se produire de manière très fréquente : une telle désynchronisation peut survenir en présence d'un champ électromagnétique de plus ou moins forte intensité. De tels champs électromagnétiques, susceptibles de perturber l'horloge de la carte se rencontrent de manière usuelle : Wifi, bluetooth, GSM, 3G, 4G, mais également systèmes de sécurité (par exemple portiques de sécurité des supermarchés ou des boutiques physiques), voire des dispositifs de lecture de données sans contact qui sont défectueux ou mal étalonnés.

Il résulte qu'une mauvaise valeur d'horloge du côté de la carte perturbe de manière importante le mécanisme de création du code dynamique. De même côté serveur, d'autres perturbations peuvent intervenir.

Ainsi, le code généré par le serveur peut différer du code généré par la carte, et les transactions ne sont ainsi plus acceptées, à moins qu'une mise à jour et/ou une resynchronisation soit effectuée (la resynchronisation à l'heure correcte ne peut être effectuée qu'auprès d'un guichet automatique bancaire) puisque les terminaux de paiement ne disposent pas du droit d'écrire sur la carte et ne sont d'ailleurs pas nécessairement connectés à la banque au moment de la transaction.

Les documents US 2012/0153028 A1 et EP 2 787 474 A2 ainsi que l'article Wikipedia « Hash chain » en date du 20 octobre 2015 décrivent diverses solutions de génération et de vérification d'un code dynamique pour la mise en œuvre d'une transaction de paiement. Ces solutions présentent cependant toutes des inconvénients, notamment eu égard à la vérification de la validité d'un code dynamique reçu côté serveur.

Il existe donc un besoin de fournir une technique de génération de code qui soit pas ou peu sensible à la désynchronisation et donc aux perturbations subies de l'environnement extérieur.

### 1. Résumé

La technique proposée ne présente pas les inconvénients de la technique antérieure. La technique proposée permet de réduire, voire d'annuler, les problèmes engendrés par une désynchronisation du moyen de paiement et du serveur. En effet, la technique proposée se base sur la mise en œuvre d'un chainage particulier de génération de données de paiement. Ce chainage offre en outre une audibilité des codes générés.

L'invention est défini dans les revendications indépendantes 1, 6 et 7. Des modes de réalisation particuliers sont également définis en relation avec les revendications dépendantes 2 à 5.

Ainsi, la présente technique se rapporte à un procédé de vérification de la validité d'une donnée de moyen de paiement selon la revendication 1, pour la mise en œuvre d'une transaction de paiement entre un moyen de paiement et un serveur de traitement.

Selon une caractéristique particulière, ladite étape de génération comprend la mise en œuvre d'une fonction de chiffrement telle que la donnée du moyen de paiement *suivante* dépend de la fonction de chiffrement, ladite fonction de chiffrement comprenant l'obtention :
- du carré de la donnée de moyen de paiement *courante ;*
- du modulo de ce carré par rapport à la clé de chiffrement.

Selon un mode de réalisation particulier, ladite donnée de moyen de paiement est un code de vérification.

Selon une caractéristique particulière, ledit procédé comprend en outre une étape d'affichage de ladite donnée de moyen de paiement suivante sur un écran dudit moyen de paiement.

Selon une caractéristique particulière, ledit procédé de chiffrement comprend en outre une étape de transmission de ladite donnée de moyen de paiement suivante à un terminal de paiement.

La technique se rapporte également à un système de vérification de la validité d'une donnée de moyen de paiement, selon la revendication 6, pour la mise en œuvre d'une transaction de paiement.

Selon une implémentation préférée, les différentes étapes du procédé selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes du procédé.

En conséquence, la technique proposée vise aussi un produit programme d'ordinateur selon la revendication 7, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est un diagramme de séquence du procédé général selon la technique proposée ;
- la figure 2 est une représentation simplifiée de la technique mise en œuvre par un moyen de paiement ;
- la figure 3 est une représentation simplifiée de la technique mise en œuvre par un serveur de traitement ;
- la figure 4 décrit succinctement l'architecture matérielle d'un moyen de paiement adapté pour mettre en œuvre la présente technique ;
- la figure 5 décrit succinctement l'architecture matérielle d'un serveur de traitement adapté pour mettre en œuvre la présente technique ;
- la figure 6 décrit succinctement la mise en œuvre de la technique avec le calcul d'une valeur réduite d'une donnée d'un moyen de paiement ;
- la figure 7 décrit succinctement deux méthodes d'audit de valeur de codes d'une donnée de moyen de paiement.

### 5. Description

### 5.1. Rappel du principe

Le principe général de la présente technique consiste en une mise en œuvre d'un chainage pour le calcul de différentes données de moyens de paiement. Un tel chainage présente de nombreux avantages dont celui de permettre un audit des codes créer (i.e. il est toujours possible, avec la méthode décrite de vérifier si un code donné est authentique ou non). Un autre avantage est, comme cela est décrit par la suite, de proposer une méthode de création de code qui soi simple, peu gourmande en termes de ressources.

La technique décrite est divisée en deux aspects différents : d'une part une technique de génération de code, à partir d'un code initial, technique qui est mise en œuvre au sein du moyen de paiement; d'autre part une technique de vérification de code (à des fins de validation de transaction de paiement et/ou à des fins d'audit), technique de vérification qui est mise en œuvre au sein d'un serveur de traitement (un tel serveur pouvant être un serveur de traitement financier, comme par exemple un serveur bancaire).

Ainsi, la présente technique vise également d'une part un moyen de paiement (comme par exemple une carte bancaire) comprenant des moyens de génération de code sur la base d'un code initial. La présente technique vise également un serveur, de type de serveur de traitement de données de transactions bancaires, comprenant des moyens de vérification de code.

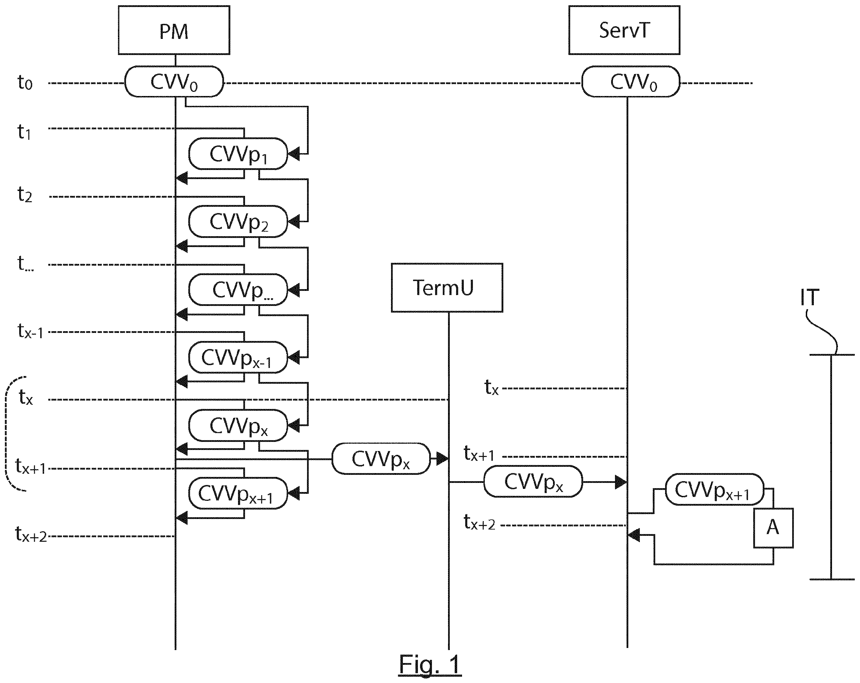

Le principe général de la technique proposé est décrit en relation avec la figure 1. Dans cette description du principe général, le code utilisé est un code de vérification (CVV, de l'anglais pour "Card Verification Value"). Il est bien entendu que la technique décrite peut également être employée pour d'autres données, à partir du moment où ces données entre dans les données de paiement d'un moyen de paiement.

Un moyen de paiement (PM) et un serveur (ServT) possèdent chacun un code (CVV0) identique. Ce code est fourni au moyen de paiement à l'initialisation de celui-ci par l'entité (par exemple l'établissement bancaire) qui gère le serveur de traitement. Au moment de cette initialisation (t0), le serveur SevT et le moyen de paiement PM sont synchronisés. Le moyen de paiement génère de manière régulière (t₁, t₂, ... tₓ₋₁, tₓ) des codes (CVVp₁, CVVp₂, CVVp..., CVVpₓ₋₁, Cvvpₓ). Chaque code généré dépend du code généré précédemment. Ainsi le code CVVp₂ dépend du code CVVp₁, ... le code Cvvpₓ dépend du code Cvvpₓ₋₁. De son côté, le serveur de traitement peut effectuer une opération similaire (bien que ceci ne soit pas obligatoire, comme cela est décrit par la suite).

Entre le moment tₓ et le moment tₓ₊₁, le code CVVpₓ est utilisé sur le terminal d'utilisateur TermU afin d'effectuer une transaction de paiement. Le code CVVpₓ est donc transmis au serveur ServT, qui compte tenu de la désynchronisation avec le moyen de paiement, reçoit ce code au temps tₓ₊₁.Dans la technique de l'art antérieur, ce code aurait été considéré comme invalide. Ce n'est pas le cas pour la présente technique.

En effet, à réception de ce code, le serveur de traitement (ServT) détermine un intervalle de traitement (IT). Sur la base d'un code en sa possession (par exemple le code courant CVVₓ₊₁) et de cet intervalle de traitement, il détermine, au sein d'un traitement [A], au moins un code éligible (c'est à dire un code qui devrait correspondre au code fourni par l'utilisateur). En fonction des calculs effectués et de la valeur transmise, il délivre alors soit une assertion de validité du code de vérification reçu soit une assertion de non validité du code de vérification reçu.

Pour effectuer le chainage entre les différente valeurs de code et pour que ce chainage soit efficace en termes de sécurité (i.e. pour qu'il ne soit pas possible de déduire une valeur précédente à partir d'une valeur connue), on met en œuvre un chiffrement basé sur une clé publique (notée « n ») en possession du moyen de paiement et une clé privée (notée « (p,q) ») en possession du serveur. On notera également que le serveur peut également disposer de la clé publique de la carte (on suppose que le serveur est sécurisé et que la possession de cette clé n'est pas préjudiciable au schéma de sécurisation).

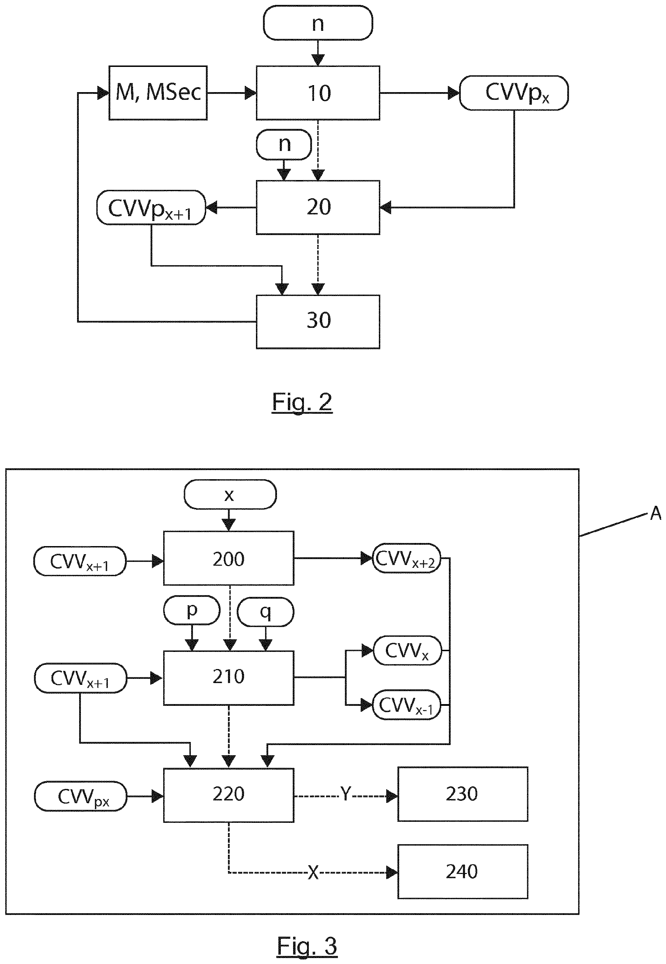

Le procédé mis en œuvre par le moyen de paiement est décrit en relation avec la figure 2. Il s'agit d'un Procédé de chiffrement d'une donnée de moyen de paiement (CVVp), procédé mis en œuvre par un moyen de paiement (MP) comprenant un processeur de traitement de données (UC), procédé caractérisé en ce qu'il comprend au moins une itération des étapes suivantes :
- obtention (10), à partir d'une mémoire du moyen de paiement (M, Msec), d'une donnée de moyen de paiement courante (CVVpₓ) ;
- génération (20), en fonction de la donnée de moyen de paiement courante (CVVpₓ) et en fonction d'une clé de chiffrement du moyen de paiement (n), d'une donnée de moyen de paiement suivante (CVVpₓ₊₁) ;
- remplacement (30), au sein de la mémoire du moyen de paiement (M, Msec), de la donnée de moyen de paiement courante (CVVpₓ) par la donnée de moyen de paiement suivante (CVVpₓ₊₁).

Ainsi, le procédé mis en œuvre au sein du moyen de paiement permet de définir une donnée de moyen de paiement de manière itérative, en fonction d'une période temporelle prédéfinie. Cette définition comprend la génération du code à partir d'une clé de chiffrement et seule la clé de déchiffrement correspondante permet de s'assurer de la validité d'une donnée reçue.

La génération de la donnée de moyen de paiement suivante par rapport à la donnée de moyen de paiement courante comprend par exemple, lorsque la taille de la donnée courante et la taille de la clé de chiffrement ne correspondent pas (c'est-à-dire que la taille de la donnée courante est inférieure à la taille de la clé) :
- une étape de remplissage d'une valeur intermédiaire à coder en fonction d'une part de a taille de la donnée courante et de la taille de la clé de chiffrement : par exemple pour une donnée courante égale à 457, on va remplir la valeur intermédiaire avec une valeur de taille permettant d'atteindre la taille de la clé moins trois (la taille de la valeur 457 étant égale à trois) ;
- une étape de chiffrement de la valeur intermédiaire à l'aide de la clé de chiffrement (n), délivrant une valeur intermédiaire chiffrée ; et
- une étape de sélection, au sein de la valeur intermédiaire chiffrée, d'une portion de la valeur intermédiaire chiffrée dont la taille est égale à la taille de la valeur courante, délivrant la donnée de moyen de paiement suivante.

Ainsi, à l'aide de cette méthode, d'une part on dispose d'une méthode de génération de données qui est robuste (on peut par exemple disposer de tailles de clés importante) et on conserve la possibilité de générer des données chiffrées qui soient conformes à la taille attendue pour ces données.

Bien évidemment, les explications précédentes portent sur l'utilisation d'un code de vérification en tant que donnée dynamique. Il est également possible, selon d'autres modes de réalisation, de faire porter cette génération dynamique sur d'autres données, bien que ceci puisse poser des problèmes d'interopérabilité. De même, il a été décrit une interaction entre un moyen de paiement comprenant des moyens de génération dynamique de données. Un tel moyen de paiement peut, comme cela a été exposé précédemment, être une carte bancaire disposant de d'un écran "eink" affichant un code CVV dynamique. Alternativement, un tel moyen de paiement peut également se présenter sous la forme d'un terminal de communication embarquant des données de carte bancaire, et dont un processeur (sécurisé) est en mesure de produire un tel code de vérification de manière dynamique.

### 5.2. Traitement côté serveur

Le serveur qui reçoit une donnée en provenance d'un terminal client doit être en mesure de vérifier que cette donnée est correcte, c'est à dire qu'elle correspond à une donnée attendue. En reprenant l'exemple précédent, on suppose qu'à l'origine le serveur dispose du même code que le moyen de paiement (i.e. le même CVV). Lorsque le serveur reçoit un code en provenance d'un terminal, il ne sait pas nécessairement quand ce code a été transmis : en effet, des aléas de transmission peut intervenir, en plus ou à la place d'une éventuelle désynchronisation.

Il peut exister un décalage plus ou moins significatif entre le code reçu par le serveur et le code actuellement en possession du serveur (c'est à dire le code qui est valide selon le serveur). Dès lors, sur la base de l'intervalle de traitement prédéterminé (IT), le serveur recalcule un certain nombre de codes valides à des heures différentes. Ces codes doivent permettre de vérifier d'une part si le code reçu correspond à un code authentique (c'est à dire un code obtenu à l'aide de la clé publique du moyen de paiement) et d'autre part si le code reçu correspond à une code acceptable au regard de l'intervalle de l'intervalle de traitement prédéterminé.

Le traitement mis en œuvre du côté du serveur est décrit, dans un mode de réalisation, en relation avec la figure 3. Plus particulièrement, il s'agit d'une description du traitement [A] référencé en figure 1.

Le serveur obtient le code courant (CVVₓ₊₁), c'est à dire le code qui correspond à sa propre configuration temporelle. Sur la base de ce code courant (CVVₓ₊₁) et en utilisant la clé publique de la carte (n), le serveur calcule (200) un nombre prédéterminé de codes suivants (CVVₓ₊₂). Le nombre prédéterminé de codes suivants dépend de l'intervalle de traitement prédéterminé.

Sur la base de ce code courant (CVVₓ₊₁) et en utilisant la clé privée de la carte (p, q), le serveur calcule (210) un nombre prédéterminé de codes précédents (CVVₓ₋₁, CVVₓ₋₂). Le nombre prédéterminé de codes précédents dépend de l'intervalle de traitement prédéterminé.

L'ensemble des codes (codes précédents, code courant, codes suivants) est comparé (220) au code reçu en provenance de la carte (CVVpₓ). Si le code reçu (CVVpₓ) correspond à un code de l'ensemble des codes (Y) alors une assertion de validation est émise (230). Si le code reçu (CVVpₓ) ne correspond pas à un code de l'ensemble des codes (Y) alors une assertion de non validation est émise (240).

La non correspondance du code reçu à un code calculé peut provenir de deux situations différentes (au moins) : la première correspond à un code erroné, ce qui se produit par exemple quand une personne malintentionnée tente d'effectuer une transaction sans disposer du code calculé de manière correcte ou quand le porteur légitime a saisi ce code de manière erronée ; la deuxième situation correspond à un code qui bien que correct du point de vue des calculs effectués est parvenu au serveur de manière trop tardive ou trop précoce : le code reçu par le serveur se situe en dehors de l'intervalle de traitement prédéterminé.

Selon une variante non représentée, le code courant est déterminé, par le serveur de traitement, au moment de la réception du code en provenance du terminal de l'utilisateur. L'opération d'obtention du code courant (et donc de l'ensemble des codes) est ainsi réalisée de manière quelque peu différente. Pour ce faire, le serveur de traitement se sert de l'heure de la transaction, qu'il reçoit (ou qu'il détermine) au moment de la réception des données en provenance du terminal de l'utilisateur. L'heure de la transaction permet de déterminer un nombre d'itérations théorique à appliquer au code de base (CVV0) pour obtenir le code courant théorique. En fonction de l'intervalle de traitement prédéterminé (IT), un certain nombre de codes précédents et suivants ainsi que le code courant théorique sont également obtenus. Ils constituent tous alors l'ensemble des codes (codes précédents, code courant, codes suivants) à comparer.

### 5.3. Description d'un mode de réalisation particulier

Dans le présent mode de réalisation, on décrit les méthodes présentées précédemment de manière plus précise en se fondant sur une combinaison de deux techniques de chiffrement/signature particulières, appliquées à la génération de codes de vérification sur une carte bancaire disposant de moyens de génération dynamiques de codes de vérification.

Il est ainsi possible de générer des codes de vérification CVVs de sorte qu'un décalage raisonnable (ou « raisonnable » est déterminé par l'émetteur de la carte et se matérialise sous la forme de l'intervalle de traitement prédéterminé (IT)) entre deux horloges n'impacte pas la fonctionnalité de génération de codes et permet à l'entité de gestion (par exemple l'établissement bancaire) de rétablir la synchronisation. L'auditabilité consiste en l'assurance qu'il est possible de vérifier la validité de tous les codes transmis sur l'ensemble des transactions effectuées par l'utilisateur.

Dans ce mode de réalisation, la technique repose sur deux composants cryptographiques : le chiffrement de Rabin et la notion de chaîne de hachage (hash chain/block chain).

### 5.3.1. Cryptosystème de Rabin

Le cryptosystème de Rabin est un protocole de chiffrement asymétrique permettant, au moyen d'un couple clé publique - clé privée, de garantir la confidentialité des données. Sa sécurité repose sur la difficulté de factoriser des grands entiers, à savoir étant donné un grand nombre entier n, trouver des entiers p et q tels que *n = pq* lorsque p et q sont de grands nombres premiers.

Dans le cadre de la présente invention, l'émetteur de la carte (l'entité de gestion, c'est-à-dire par exemple l'établissement bancaire) dispose d'un entier secret p et d'un entier secret q de taille suffisante (1024 bits au moins). L'émetteur inscrit la clé publique *n = pq* au sein d'une mémoire de la carte.

Afin de chiffrer un message, représenté par un entier m compris entre 0 et *n-1,* on calcule le message chiffré c par la formule *c* = *m*² mod *n*.

Par exemple pour chiffrer le code de vérification CVVₓ de valeur 123, on va d'abord définir les clés à utiliser. Dans un exemple simple, on prend n=1007 et p=53 et q=19. Lors du chiffrement, on réalise le calcul suivant : 123² mod 1007 = 24.

On peut également considérer un cas réaliste, où n est un véritable module RSA de 1024 bits et au lieu de chiffrer directement 123, on chiffre mu(123) où mu est une fonction de remplissage RSA qui possède la propriété d'être OAEP (de l'anglais *«Optimal Asymmetric Encryption Padding »* pour « remplissage optimal à chiffrement asymétrique »).

Un exemple taille réelle serait par exemple :
- p=1213107243921127189732367153161244042847242763370141092563454 931230196437304208561932419736532241686654101705736136521417171 1713797974299334871062829803541;
- q=1202752425547874888595622079373451212873338780368207543365389 998395517985098879789986914690080913161115334681705083209602216 0146366346391812470987105415233;
- n=1459067680075833232301869393490706352924018723753571643995818 710198734387990053589383695714026701498021218180862924674228281 570229220767469065434012248896724724079269699871005812901031993 178587536637108623576565105078837142971156373427889114635351027 12032765166518411726859837988672111837205085526346618740053;
- m=555041393701322474974042418655018073667244705292250070809611 365936546457272368823524112655554569916587224227633577622353825 683716403875365804390441097823138684337419760262196002386240763 067116427758255305285959053448073497936966273643969834143785184 6711473979473756400753049463122684609316625649987101531205;
- C=7288778783102333058793784444715555411624245746064214929398770 643834382200958672717178994107835269267917670312422473013207243 424305061989730577743651481609571171826352798954519237333535266 040303700051178161909756618918006135378047598418666833648444458 7742195501262476807847210491098614841292100452980810558633;

Seule l'entité disposant de la clé privée (p, *q)* peut déchiffrer ce message (c'est-à-dire l'émetteur de la carte, par exemple l'établissement bancaire). Pour cela, elle calcule la racine carrée de c modulo n, en utilisant sa connaissance de la fonction d'Euler *ϕ*(*n*) = (*p* ― 1)(*q* ― 1).

### 5.3.2. Chaîne de hachage

Une chaîne de hachage est une suite de nombres *M₁, M₂, ...* , *Mₖ* qui satisfait la propriété *M*_{*i*+1} = *f*(*Mᵢ*) pour une fonction *f* appelée « fonction de hachage ». Des fonctions de hachages classiques sont MD4, MD5, SHA (1, 2 ou 3), et peuvent-être obtenue à partir de tout mécanisme de chiffrement à blocs (par exemple AES) dans un mode approprié.

L'intérêt d'une chaîne de hachage est notamment qu'il est calculatoirement facile d'obtenir les termes suivants, mais calculatoirement difficile d'obtenir les termes précédents d'un terme donné (à moins qu'une donnée secrète soit connue).

Dans le cadre de la présente invention, on utilise pour fonction de hachage la fonction de Rabin *ƒ*(*x*) = *x*² mod *n* décrite précédemment. L'intérêt de Rabin est que sa sécurité est démontrée mathématiquement et repose sur la difficulté de factoriser de grands nombres entiers. Par ailleurs, le calcul du carré modulaire d'un nombre se prête particulièrement bien à une implémentation pour un code de vérification.

Par ailleurs, dans le cas de Rabin, il est en fait possible de remonter la chaîne, à condition de posséder un secret : la décomposition du nombre n en facteurs premiers. On pourrait employer toute fonction de hachage à trappe pour remplir la même fonctionnalité (par exemple RSA).

### 5.3.3. Génération du CVV

À un moment de son utilisation la carte va générer un nouveau CVV. Ce moment peut être déterminé par plusieurs événements : entrée utilisateur, déclenchement régulier basé sur une horloge, commande reçue par un terminal, etc.

Un nouveau CVV *C*_{*i*+1} est généré par la carte à partir du dernier CVV utilisé *Cᵢ*, en utilisant la fonction de Rabin : *C*_{*i*+1} = *f(Cᵢ).* Il peut alors être communiqué à l'utilisateur par une variété de moyens (affichage, etc.) ou directement transmis (terminal, etc.) auprès de celui qui en vérifiera la validité.

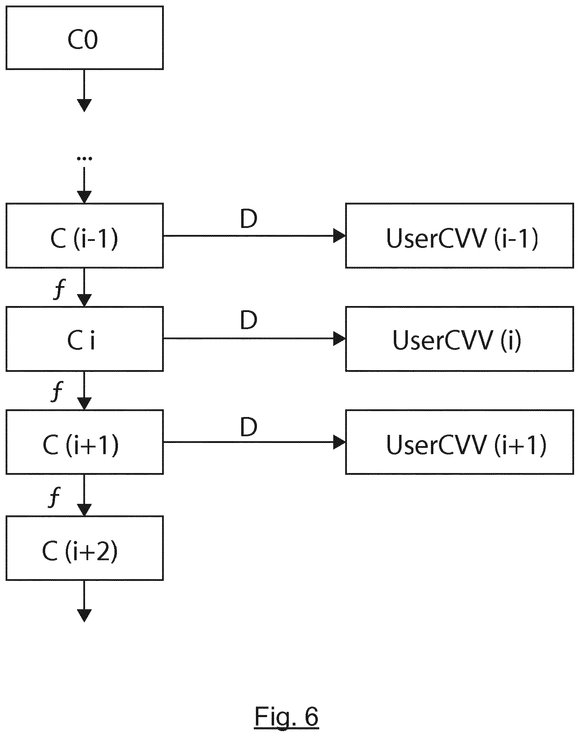

Bien entendu, dans un cas réel, tel que présenté en figure 6, ce n'est pas l'intégralité du résultat de la fonction f qui est affiché (la longueur de 1024 bits serait trop importante). Ainsi, il est possible de n'afficher qu'une fonction *D*(Cᵢ₊₁) qui dépend par exemple des 8, 16, 24 ou 32 derniers bits de Cᵢ₊₁. Alternativement D peut être une fonction de hachage. On conserve ainsi une taille pour l'entrée utilisateur raisonnablement courte (3 à 5 caractères par exemple, avec une dizaine de caractères au maximum afin que cette donnée puisse être saisie de manière simple par un utilisateur).

La vérification peut alors être modifiée en conséquence, pour ne tenir compte que de la portion en question de *D*(Cᵢ₊₁) communiquée à l'utilisateur. Bien entendu, cette méthode de réduction de la longueur de la valeur de code peut être mise en œuvre quelle que soit la donnée de moyen de paiement et n'est nullement limitée au code de vérification (CVV).

Une fois ce nouveau CVV utilisé, il est mémorisé par la carte. Il servira à générer un prochain CVV.

Lors de la fabrication de la carte, celle-ci est munie d'un « premier » CVV *C*₀ connu de l'émetteur, qui servira de graine (c'est-à-dire de valeur de départ) pour générer tous les CVV suivants.

### 5.3.4. Vérification du CVV et resynchronisation

Le serveur de traitement, en charge de vérifier un code reçu, dispose en mémoire du dernier CVV valide *Cₘ* utilisé par la carte. Lorsque la carte transmet un nouveau CVV *Cᵢ₊₁,* le serveur de traitement effectue les opérations suivantes :
- Si *C*_{*i*+1} = *f*(*Cₘ*) alors le CVV est valide, la transaction est acceptée, et la nouvelle valeur de *Cₘ* devient *C*_{*i*+1} ;
- Sinon :
   ∘ Pour j entre 2 et une valeur donnée *jₘₐₓ* (par exemple 4), le vérifieur calcule *C*_{*m*+}*ⱼ;*
   ∘ Si *C*_{*i*+1} = *Cₘ₊ⱼ* pour une valeur de j alors il y a eu désynchronisation, mais la transaction est valide : la transaction est acceptée, et la nouvelle valeur de *Cₘ* devient *C*_{*i*+1} ;
   ∘ Sinon, la transaction est refusée.

On précise par ailleurs que, lorsqu'on utilise la fonction D définie ci-dessus, on compare en réalité *D*(Cᵢ₊₁) *et D(f(Cₘ))* toutes choses égales par ailleurs.

La valeur de *jₘₐₓ* est le décalage maximal accepté par le serveur de traitement et est représentative de l'intervalle de traitement IT. Cette valeur peut être fixée à l'avance, ou être adaptée : par exemple, on peut accepter un fort décalage une unique fois, et exiger dans la suite que les décalages soient plus petits.

D'une manière générale, les événements de resynchronisation peuvent être enregistrés par le vérifieur, à des fins d'analyse, de détection de fraude ou de maintenance. L'opération est transparente pour le détenteur de la carte.

### 5.3.5. Auditabilité

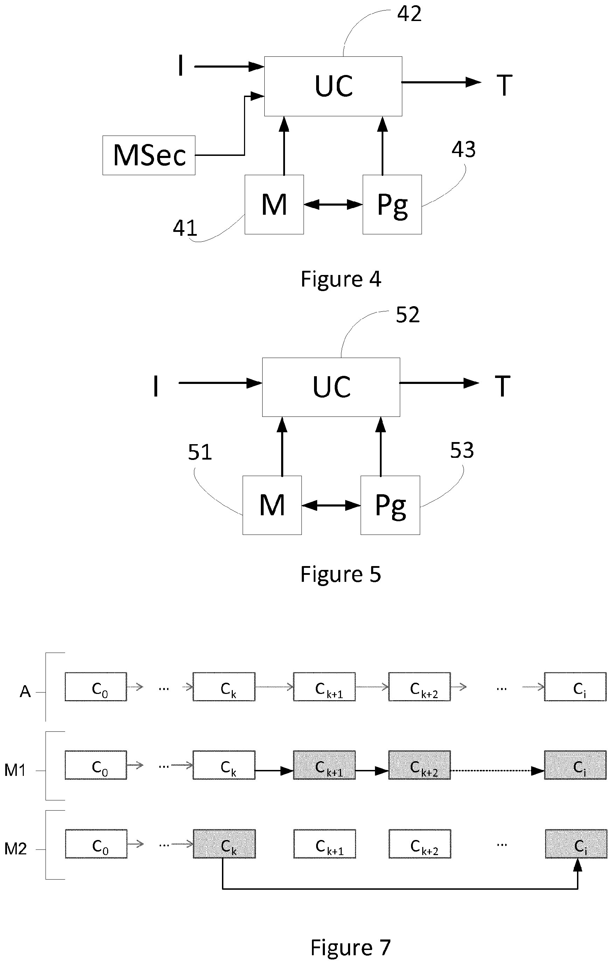

L'ensemble des CVVs générés par une carte peut être vérifié, de deux manières : (1) directement, à partir de la graine (de la valeur de départ), en recalculant tous les CVV de manière itérative jusqu'au point actuel (« *slow-rewind* »), ou (2) en utilisant la décomposition du nombre secret *n* pour effectuer directement une racine modulaire (« *fast-rewind* ») et atteindre n'importe quel CVV. Ces méthodes sont présentées en relation avec la figure 7, qui présente d'une part (A), l'enchainement des calculs que doit réaliser la carte (dans cet exemple la valeur Cₖ₊₁ est déjà en possession du serveur car le serveur a déjà vérifié cette valeur par le passé et le serveur doit vérifier la valeur Cᵢ). Pour ce faire, deux méthodes sont envisageable (M1 et M2)

La première méthode peut être réalisée par toute entité possédant la clé publique n mais est relativement coûteuse, ce qui la limite à la vérification de quelques transactions successives. Il s'agit de la méthode M1 dans laquelle le serveur calcule itérativement depuis la dernière valeur en sa possession (Cₖ₊₁) tous les codes (CVV) intermédiaires jusqu'à obtenir la valeur recherchée (Ci). L'avantage de cette méthode est que toutes les valeurs intermédiaires successives du code sont vérifiées par la même occasion.

La seconde méthode M2, réservée à une entité qui possède la clé secrète (par exemple se serveur), permet immédiatement de vérifier toute la chaîne de code (CVV) dans un ordre arbitraire : à l'aide des clés, le serveur peut effectuer un calcul direct de l'occurrence souhaité à partir de la valeur de départ du code.

### 5.3. Autres caractéristiques et avantages

On décrit, en relation avec la **figure 4****,** un terminal de communication comprenant des moyens permettant l'exécution du procédé décrit préalablement, afin de générer de manière dynamique des données bancaires.

Par exemple, le terminal de communication comprend une mémoire 41 constituée d'une mémoire tampon, une unité de traitement 42, équipée par exemple d'un microprocesseur, et pilotée par le programme d'ordinateur 43, mettant en œuvre les étapes nécessaires à l'obtention, au calcul et à la transmission de données de traitement de bancaires (Codes de vérification, date de validité, etc.).

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple une donnée bancaire courante (par exemple un code de vérification courant). Le microprocesseur de l'unité de traitement 42 met en œuvre les étapes du procédé, selon les instructions du programme d'ordinateur 43 pour permettre le calcul d'une donnée bancaire suivante (par exemple un code de vérification suivant).

Pour cela, le dispositif de traitement comprend, outre la mémoire tampon 41, des moyens de calcul et de chiffrement, comprenant notamment un processeur par exemple sécurisé et un mémoire tout autant sécurisée. Ces moyens peuvent être pilotés par le processeur de l'unité de traitement 42 en fonction du programme d'ordinateur 43.

On décrit, en relation avec la **figure 5**, un serveur de traitement comprenant des moyens permettant l'exécution du procédé décrit préalablement.

Par exemple, le serveur de traitement comprend une mémoire 51 constituée d'une mémoire tampon, une unité de traitement 52, équipée par exemple d'un microprocesseur, et pilotée par le programme d'ordinateur 53, nécessaires à la mise en œuvre des fonctions de vérification des données de transaction et notamment des données bancaires reçues.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple un ensemble de données chiffrées, comprenant par exemple une donnée bancaire courante. Le microprocesseur de l'unité de traitement 52 met en œuvre les étapes du procédé de traitement, selon les instructions du programme d'ordinateur 53 pour permettre la vérification de la donnée bancaire courante au regard d'une donnée bancaire de référence, calculée par rapport à un intervalle temporel prédéterminé.

Pour cela, le dispositif comprend, outre la mémoire tampon 51, des moyens d'obtention de clé de chiffrement/déchiffrement ; ces moyens peuvent se présenter sous la forme d'un processeur ou d'un ensemble de ressources sécurisées permettant de sécuriser la saisie de l'autorisation. Le dispositif comprend également des moyens de traitement cryptographiques; ces moyens de traitement comprennent par exemple un processeur de chiffrement dédié.

Ces moyens peuvent être pilotés par le processeur de l'unité de traitement 52 en fonction du programme d'ordinateur 53.

## Revendications

1. Procédé de vérification de la validité d'une donnée de moyen de paiement (CVVp) pour la mise en œuvre d'une transaction de paiement entre un moyen de paiement (MP) comprenant un processeur de traitement de données et un serveur de traitement comprenant un processeur de traitement de données, ledit procédé comprenant :
- une phase de chiffrement de la donnée de moyen de paiement (CVVp), mise en œuvre par ledit moyen de paiement (MP), comprenant :
- une étape d'obtention (10), à partir d'une mémoire du moyen de paiement (M, Msec), d'une donnée de moyen de paiement courante;
- une étape de génération (20), en fonction de la donnée de moyen de paiement courante et en fonction d'une clé publique de chiffrement n du moyen de paiement, d'une donnée de moyen de paiement suivante, ladite génération reposant sur l'utilisation d'un protocole de chiffrement asymétrique de Rabin, ladite clé publique de chiffrement n étant le produit de deux grands nombres premiers entiers p et q ;
- une étape de transmission de la donnée de moyen de paiement suivante audit serveur de traitement ;
- une étape de remplacement (30), au sein de la mémoire du moyen de paiement (M, Msec), de la donnée de moyen de paiement courante par la donnée de moyen de paiement suivante, la donnée de moyen de paiement suivante devenant la donnée de moyen de paiement courante pour une itération suivante desdites étapes d'obtention (10), de génération (20) et de remplacement (30), chaque donnée de moyen de paiement suivante dépendant de la donnée de moyen de paiement courante dans ces étapes itératives ;
- une phase de vérification de la validité de ladite donnée de moyen de paiement suivante, mise en œuvre par ledit serveur de traitement, comprenant :
- une étape d'obtention de ladite donnée de moyen de paiement suivante dudit moyen de paiement (MP) ;
- une étape d'obtention, au sein d'une mémoire du serveur, d'une donnée de moyen de paiement de référence ;
- une étape de calcul, en utilisant ledit protocole de chiffrement asymétrique de Rabin, à partir de la donnée de moyen de paiement de référence, en fonction d'une période temporelle prédéterminée (PI) :
- d'un nombre prédéterminé de codes suivants, en utilisant la clé publique de chiffrement n du moyen de paiement ; et
- d'un nombre prédéterminé de codes précédents, en utilisant les grands nombres premiers p et q définissant une clé privée du moyen de paiement ;
délivrant des données de moyens de paiement de comparaison, formant un ensemble de données de référence ;
- une étape de comparaison de la donnée de moyen de paiement suivante avec les données dudit ensemble de données de référence, délivrant une assertion de validité de ladite donnée de moyen de paiement suivante lorsqu'elle est identique à une des données de l'ensemble.

2. Procédé de chiffrement selon la revendication 1, **caractérisé en ce que** ladite étape de génération comprend la mise en œuvre d'une fonction de chiffrement (f) telle que la donnée du moyen de paiement suivante dépend de la fonction de chiffrement (f), ladite fonction de chiffrement (f) comprenant l'obtention :
- du carré de la donnée de moyen de paiement courante ;
- du modulo de ce carré par rapport à la clé de chiffrement n.

3. Procédé de chiffrement selon la revendication 1, **caractérisé en ce que** ladite donnée de moyen de paiement est un code de vérification.

4. Procédé de chiffrement selon la revendication 1, **caractérisé en ce qu'**il comprend en outre une étape d'affichage de ladite donnée de moyen de paiement suivante sur un écran dudit moyen de paiement.

5. Procédé de chiffrement selon la revendication 1, **caractérisé en ce qu'**il comprend en outre une étape de transmission de ladite donnée de moyen de paiement suivante à un terminal de paiement.

6. Système de vérification de la validité d'une donnée de moyen de paiement (CVVp) pour la mise en œuvre d'une transaction de paiement, ledit système comprenant :
- un moyen de paiement (MP) comprenant un processeur de traitement de données (UC), ledit moyen de paiement comprenant des moyens de chiffrement actionnables de manière itérative, lesdits moyens de chiffrement comprenant :
- des moyens d'obtention, à partir d'une mémoire sécurisée du moyen de paiement (Msec), d'une donnée de moyen de paiement courante ;
- des moyens de génération, en fonction de la donnée de moyen de paiement courante et en fonction d'une clé publique de chiffrement n du moyen de paiement, d'une donnée de moyen de paiement suivante, ladite génération reposant sur l'utilisation d'un protocole de chiffrement asymétrique de Rabin, ladite clé publique de chiffrement *n* étant le produit de deux grands nombres premiers entiers *p* et *q* ;
- des moyens de transmission de la donnée de moyen de paiement suivante à un serveur de traitement ;
- des moyens de remplacement, au sein de la mémoire sécurisée du moyen de paiement (Msec), de la donnée de moyen de paiement courante par la donnée de moyen de paiement suivante, la donnée de moyen de paiement suivante devenant la donnée de moyen de paiement courante pour une itération suivante d'actionnement desdits moyens de chiffrement, chaque donnée de moyen de paiement suivante dépendant de la donnée de moyen de paiement courante dans ces itérations ;
- un serveur de traitement comprenant un processeur de traitement de données (UC), ledit serveur comprenant des moyens de traitement cryptographiques apte à permettre une vérification de la validité de ladite donnée de moyen de paiement suivante, les moyens de traitement cryptographiques comprenant :
- des moyens d'obtention de ladite donnée de moyen de paiement suivante dudit moyen de paiement (MP) ;
- des moyens d'obtention, au sein d'une mémoire du serveur, d'une donnée de moyen de paiement de référence ;
- des moyens de calcul, en utilisant ledit protocole de chiffrement asymétrique de Rabin, à partir de la donnée de moyen de paiement de référence, en fonction d'une période temporelle prédéterminée (PI) :
- d'un nombre prédéterminé de codes suivants, en utilisant la clé publique de chiffrement *n* du moyen de paiement ; et
- d'un nombre prédéterminé de codes précédents, en utilisant les grands nombres premiers *p* et *q* définissant une clé privée du moyen de paiement ;
délivrant des données de moyens de paiement de comparaison, formant un ensemble de données de référence ;
- des moyens de comparaison de la donnée de moyen de paiement suivante avec les données dudit ensemble de données de référence, délivrant une assertion de validité de ladite donnée de moyen de paiement suivante lorsqu'elle est identique à une des données de l'ensemble.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de vérification de la validité d'une donnée de moyen de paiement selon l'une quelconque des revendications 1 à 5.

## Patentansprüche

1. Verfahren zum Überprüfen der Gültigkeit einer Dateneinheit eines Zahlungsmittels (CVVp) zum Umsetzen einer Zahlungstransaktion zwischen einem Zahlungsmittel (MP), das einen Prozessor zur Verarbeitung von Daten aufweist, und einem Verarbeitungsserver, der einen Prozessor zur Verarbeitung von Daten aufweist, wobei das Verfahren aufweist:
- eine Phase des Verschlüsselns der Dateneinheit eines Zahlungsmittels (CVVp), die von dem Zahlungsmittel (MP) umgesetzt wird, umfassend:
- einen Schritt des Erhaltens (10) einer aktuellen Dateneinheit eines Zahlungsmittels ausgehend von einem Speicher des Zahlungsmittels (M, Msec);
- einen Schritt des Generierens (20) in Abhängigkeit von der aktuellen Dateneinheit eines Zahlungsmittels und in Abhängigkeit von einem öffentlichen Verschlüsselungsschlüssel *n* des Zahlungsmittels einer nachfolgenden Dateneinheit eines Zahlungsmittels, wobei das Generieren auf der Verwendung eines Protokolls der asymmetrischen Rabin-Verschlüsselung beruht, wobei der öffentliche Verschlüsselungsschlüssel n das Produkt aus zwei großen Primzahlen *p* und *q* ist;
- einen Schritt des Übertragens der nachfolgenden Dateneinheit eines Zahlungsmittels an den Verarbeitungsserver;
- einen Schritt des Ersetzens (30) der aktuellen Dateneinheit eines Zahlungsmittels durch die nachfolgende Dateneinheit eines Zahlungsmittels in dem Speicher des Zahlungsmittels (M, Msec), wobei die nachfolgende Dateneinheit eines Zahlungsmittels für ein nachfolgendes Wiederholen der Schritte des Erhaltens (10), des Generierens (20) und des Ersetzens (30) die aktuelle Dateneinheit eines Zahlungsmittels wird, wobei jede nachfolgende Dateneinheit eines Zahlungsmittels in diesen sich wiederholenden Schritten von der aktuellen Dateneinheit eines Zahlungsmittels abhängt;
- eine Phase des Überprüfens der Gültigkeit der nachfolgenden Dateneinheit eines Zahlungsmittels, die von dem Verarbeitungsserver umgesetzt wird, umfassend:
- einen Schritt des Erhaltens der nachfolgenden Dateneinheit eines Zahlungsmittels von dem Zahlungsmittel (MP);
- einen Schritt des Erhaltens einer Referenzdateneinheit eines Zahlungsmittels in einem Speicher des Servers;
- einen Schritt des Berechnens unter Verwendung des Protokolls der asymmetrischen Rabin-Verschlüsselung ausgehend von der Referenzdateneinheit eines Zahlungsmittels in Abhängigkeit von einer vorbestimmten Zeitdauer (PI):
- einer vorbestimmten Anzahl von nachfolgenden Codes unter Verwendung des öffentlichen Verschlüsselungsschlüssels *n* des Zahlungsmittels; und
- einer vorbestimmten Anzahl von vorhergehenden Codes unter Verwendung der großen Primzahlen p und q, die einen privaten Schlüssel des Zahlungsmittels definieren;
wodurch Vergleichsdaten von Zahlungsmitteln bereitgestellt werden, die einen Referenzdatensatz bilden;
- einen Schritt des Vergleichens der nachfolgenden Dateneinheit eines Zahlungsmittels mit den Daten des Referenzdatensatzes, wodurch eine Gültigkeitsbehauptung der nachfolgenden Dateneinheit eines Zahlungsmittels bereitgestellt wird, wenn sie mit einer Dateneinheit der Daten des Satzes identisch ist.

2. Verfahren zum Verschlüsseln nach Anspruch 1, **dadurch gekennzeichnet, dass** der Schritt des Generierens das Umsetzen einer derartigen Verschlüsselungsfunktion (*f*) aufweist, dass die nachfolgende Dateneinheit des Zahlungsmittels von der Verschlüsselungsfunktion (*f*) abhängt, wobei die Verschlüsselungsfunktion (*f*) das Erhalten:
- des Quadrats der aktuellen Dateneinheit eines Zahlungsmittels;
- des Moduls dieses Quadrats in Bezug auf den Verschlüsselungsschlüssel n aufweist.

3. Verfahren zum Verschlüsseln nach Anspruch 1, **dadurch gekennzeichnet, dass** die Dateneinheit eines Zahlungsmittels ein Bestätigungscode ist.

4. Verfahren zum Verschlüsseln nach Anspruch 1, **dadurch gekennzeichnet, dass** es ferner einen Schritt des Anzeigens der nachfolgenden Dateneinheit eines Zahlungsmittels auf einem Bildschirm des Zahlungsmittels aufweist.

5. Verfahren zum Verschlüsseln nach Anspruch 1, **dadurch gekennzeichnet, dass** es ferner einen Schritt des Übertragens der nachfolgenden Dateneinheit eines Zahlungsmittels an ein Zahlungsendgerät aufweist.

6. System zum Überprüfen der Gültigkeit einer Dateneinheit eines Zahlungsmittels (CVVp) zum Umsetzen einer Zahlungstransaktion, wobei das System aufweist:
- ein Zahlungsmittel (MP), das einen Prozessor zur Verarbeitung von Daten (UC) aufweist, wobei das Zahlungsmittel Verschlüsselungsmittel aufweist, die iterativ betätigbar sind, wobei die Verschlüsselungsmittel aufweisen:
- Mittel zum Erhalten einer aktuellen Dateneinheit eines Zahlungsmittels ausgehend von einem Speicher des Zahlungsmittels (Msec);
- Mittel zum Generieren in Abhängigkeit von der aktuellen Dateneinheit eines Zahlungsmittels und in Abhängigkeit von einem öffentlichen Verschlüsselungsschlüssel n des Zahlungsmittels einer nachfolgenden Dateneinheit eines Zahlungsmittels, wobei das Generieren auf der Verwendung eines Protokolls der asymmetrischen Rabin-Verschlüsselung beruht, wobei der öffentliche Verschlüsselungsschlüssel n das Produkt aus zwei großen Primzahlen *p* und *q* ist;
- Mittel zum Übertragen der nachfolgenden Dateneinheit eines Zahlungsmittels an einen Verarbeitungs server;
- Mittel zum Ersetzen der aktuellen Dateneinheit eines Zahlungsmittels durch die nachfolgende Dateneinheit eines Zahlungsmittels in dem Speicher des Zahlungsmittels (Msec), wobei die nachfolgende Dateneinheit eines Zahlungsmittels für ein nachfolgendes Wiederholen des Betätigens der Verschlüsselungsmittel die aktuelle Dateneinheit eines Zahlungsmittels wird, wobei jede nachfolgende Dateneinheit eines Zahlungsmittels bei diesen Wiederholungen von der aktuellen Dateneinheit eines Zahlungsmittels abhängt;
- einen Verarbeitungsserver, der einen Prozessor zur Verarbeitung von Daten (UC) aufweist, wobei der Server kryptographische Verarbeitungsmittel aufweist, die geeignet sind, ein Überprüfen der Gültigkeit der nachfolgende Dateneinheit eines Zahlungsmittels zu ermöglichen, wobei die kryptographischen Verarbeitungsmittel aufweisen:
- Mittel zum Erhalten der nachfolgenden Dateneinheit eines Zahlungsmittels von dem Zahlungsmittel (MP);
- Mittel zum Erhalten einer Referenzdateneinheit eines Zahlungsmittels in einem Speicher des Servers;
- Mittel zum Berechnen unter Verwendung des Protokolls der asymmetrischen Rabin-Verschlüsselung ausgehend von der Referenzdateneinheit eines Zahlungsmittels in Abhängigkeit von einer vorbestimmten Zeitdauer (PI):
- einer vorbestimmten Anzahl von nachfolgenden Codes unter Verwendung des öffentlichen Verschlüsselungsschlüssels *n* des Zahlungsmittels; und
- einer vorbestimmten Anzahl von vorhergehenden Codes unter Verwendung der großen Primzahlen p und q, die einen privaten Schlüssel des Zahlungsmittels definieren;
wodurch Vergleichsdaten von Zahlungsmitteln bereitgestellt werden, die einen Referenzdatensatz bilden;
- Mittel zum Vergleichen der nachfolgenden Dateneinheit eines Zahlungsmittels mit den Daten des Referenzdatensatzes, wodurch eine Gültigkeitsbehauptung der nachfolgenden Dateneinheit eines Zahlungsmittels bereitgestellt wird, wenn sie mit einer Dateneinheit der Daten des Satzes identisch ist.

7. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Überprüfen der Gültigkeit einer Dateneinheit eines Zahlungsmittels nach einem der Ansprüche 1 bis 5 aufweist.

## Claims

1. Method for verifying the validity of a piece of payment means data (CVVp) for implementing a payment transaction between a payment means (MP) comprising a data processor and a processing server comprising a data processor, the method comprising:
- a phase for encrypting the piece of payment means data (CVVp), implemented by said payment means (MP), comprising:
- a step for obtaining (10) a current piece of payment means data from a memory of the payment means (M, Msec);
- a step for generating (20) a following piece of payment means data as a function of the current piece of payment means data and as a function of a public encryption key *n* of the payment means, said generating relying on the use of a Rabin asymmetric encryption protocol, said public encryption key n being the product of two large prime integers p and q;
- a step for transmitting the following piece of payment means data to said processing server;
- a step for replacing (30) the current piece of payment means data by the following piece of payment means data within the memory of the payment means (M, Msec), the following piece of payment means data becoming the current piece of payment means data for a following iteration of the steps for obtaining (10), for generating (20) and for replacing (30), each following piece of payment means data depending on the current piece of payment means data in these iterative steps;
- a phase for verifying the validity of said following piece of payment means data, implemented by said processing server, comprising:
- a step for obtaining said following piece of payment means data from said payment means (MP);
- a step for obtaining a piece of payment means reference data within a memory of the server;
- a step for computing, using said Rabin asymmetric encryption protocol, from the piece of payment means reference data, as a function of a predetermined time period (PI):
- a predetermined number of following codes, using the public encryption key *n* of the payment means; and
- a predetermined number of the preceding codes, using the large prime integers *p* and *q* defining a private key of the payment means;
delivering payment means comparison data, forming a set of reference data;
- a step for comparing the following piece of payment means data with the data of said set of reference data, delivering an assertion of validity of said following piece of payment means data when it is identical to one of the pieces of data of the set.

2. Method for encrypting according to claim 1, **characterized in that** said step for generating comprises the implementing of an encryption function *(ƒ)* such that the following piece of payment means data depends on the encryption function *(f)*, said encryption function *(f)* comprising the obtaining of:
- the square of the current piece of payment means data;
- the square modulo the encryption key n.

3. Method for encrypting according to claim 1, **characterized in that** said encryption function is a verification code.

4. Method for encrypting according to claim 1, **characterized in that** it further comprises a step for displaying said following piece of payment means data on a screen of said payment means.

5. Method for encrypting according to claim 1, **characterized in that** it further comprises a step for transmitting said following piece of payment means data to a payment terminal.

6. System for verifying the validity of a piece of payment means data (CVVp) for implementing a payment transaction, said system comprising:
- a payment means (MP) comprising a data processor, said payment means (MP) comprising encryption means that can be actuated iteratively, said encryption means comprising:
- means for obtaining a current piece of payment means data from a secure memory (Msec) of the payment means ;
- means for generating a following piece of payment means data as a function of the current piece of payment means data and as a function of a public encryption key *n* of the payment means, said generating relying on the use of a Rabin asymmetric encryption protocol, said public encryption key n being the product of two large prime integers *p* and *q*;
- means for transmitting the following piece of payment means data to a processing server;
- means for replacing the current piece of payment means data by the following piece of payment means data within the secure memory of the payment means (Msec), the following piece of payment means data becoming the current piece of payment means data for a following iteration of actuating said encryption means, each following piece of payment means data depending on the current piece of payment means data in these iterations;
- a processing server comprising a data processor (UC), said server comprising means of cryptographic processing capable of enabling a verification of the validity of said following piece of payment means data, the cryptographic processing means comprising:
- means for obtaining said following piece of payment means data from said payment means (MP);
- means for obtaining a piece of payment means reference data within a memory of the server;
- means for computing, using said Rabin asymmetric encryption protocol, from the piece of payment means reference data, as a function of a predetermined time period (PI):
- a predetermined number of following codes, using the public encryption key *n* of the payment means; and
- a predetermined number of the preceding codes, using the large prime integers *p* and *q* defining a private key of the payment means;
delivering payment means comparison data, forming a set of reference data;
- means for comparing the following piece of payment means data with the data of said set of reference data, delivering an assertion of validity of said following piece of payment means data when it is identical to one of the pieces of data of the set.

7. Computer program downloadable from a communications network and/or stored in a computer readable medium and/or executable by a microprocessor, **characterized in that** it comprises program code instructions to execute a method for verifying the validity of a piece of payment means data according to anyone of claim 1 to 5.
